**Europäisches Patentamt**

**European Patent Office**

**Office européen des brevets**

(19)

(11) Veröffentlichungsnummer : **0 413 953 B1**

(12)

# EUROPÄISCHE PATENTSCHRIFT

(45) Veröffentlichungstag der Patentschrift :
**12.05.93 Patentblatt 93/19**

(51) Int. Cl.$^5$ : **C08F 220/06, C08F 216/14**

(21) Anmeldenummer : **90113572.3**

(22) Anmeldetag : **16.07.90**

(54) **Als Verdickungsmittel für wässrige Zubereitungen eines pH-Wertes 5,5 wirkendes Copolymerisat, Verfahren zu seiner Herstellung und seine Verwendung als Verdickungsmittel.**

(30) Priorität : **29.07.89 DE 3925220**

(43) Veröffentlichungstag der Anmeldung :
**27.02.91 Patentblatt 91/09**

(45) Bekanntmachung des Hinweises auf die
Patenterteilung :
**12.05.93 Patentblatt 93/19**

(84) Benannte Vertragsstaaten :
**BE DE FR GB NL**

(56) Entgegenhaltungen :
**EP-A- 0 013 836**
**EP-A- 0 213 799**
**EP-A- 0 216 479**

(73) Patentinhaber : **Th. Goldschmidt AG**
**Goldschmidtstrasse 100 Postfach 101461**
**W-4300 Essen 1 (DE)**

(72) Erfinder : **Fock, Jürgen, Dr.**
**Mörsenbroicher Weg 114**
**W-4000 Düsseldorf 30 (DE)**
Erfinder : **Esselborn, Eberhard**
**Pilotystrasse 21**
**W-4300 Essen 1 (DE)**

EP 0 413 953 B1

**Beschreibung**

Die Erfindung betrifft ein Copolymerisat, welches als Verdickungsmittel für wäßrige Zubereitungen verwendet werden kann, die einen pH-Wert von > 5,5 aufweisen, ein Verfahren zu seiner Herstellung und seine Verwendung als Verdickungsmittel.

Polymerisate, die pH-abhängig wäßrige Zubereitungen verdicken, sind aus dem Stand der Technik bekannt.

In der EP-A1 0 216 479 werden im alkalischen oder sauren Medium wasserlösliche oder wasserquellbare Copolymere beschrieben, die bei einem pH-Wert von 7 aber unlöslich oder nicht wasserquellbar sind.

Hergestellt werden sie durch die Polymerisation in Emulsion von

a) 0 bis 90 Gew.-% ethylenisch ungesättigten, ionischen Monomeren,

b) 0 bis 90 Gew.-% ethylenisch ungesättigten, hauptsächlich nicht-ionischen Monomeren,

c) 0,5 bis 100 Gew.-% eines Ethers der Formel

$$CH_2=CR'CH_2-O-A_mB_nA_p-R,$$

wobei R' H oder Methyl, A ein Propylenoxy- oder Butylenoxy-Rest, B ein Ethylenoxy-Rest, n gleich 0 oder eine ganze Zahl, in der Regel 1 bis 100, m und p jeweils 0 oder eine ganze Zahl kleiner als n und R eine hydrophobe Gruppe mit mindestens 8 Kohlenstoffatomen ist, und

d) 0 bis 5 Gew.-% eines vernetzenden Monomeren, vorzugsweise eines copolymerisierbaren, polyethylenisch ungesättigten Monomeren.

Üblicherweise handelt es sich bei dem ionischen Monomeren a) um eine Vinylverbindung, besonders um Acryl- oder Methacrylsäurederivate, wobei im Fall der freien Säure deren Anteil an der Komponente a) 50 bis 100 % beträgt. Das nichtionische Monomere b) enthält eine Vinylgruppe. In der Regel handelt es sich um ein Acrylat oder Styrolderivat. Bevorzugt werden als Komponente b) 50 bis 100 Gew.-% Alkylmethacrylat eingesetzt. Die Zugabe des vernetzenden Monomeren d) ist optional.

Von besonderer Bedeutung ist der Ether c), denn durch die geeignete Wahl der Werte n, m, p und R ist es möglich, die Eigenschaften des Produktes gezielt zu beeinflussen. Dabei wird dem hydrophoben Rest R eine zusätzliche Verstärkung des Verdickungseffektes zugeschrieben. In der Regel enthält der Ether eine Polyoxyethylenkette $B_n$ zwischen dem Allylrest und dem hydrophoben Rest R. Es können auch noch zusätzliche Polyoxypropylen- oder Polyoxybutylengruppen $A_m$ oder $A_p$ im Molekül vorhanden sein. Der hydrophobe Rest R enthält wenigstens 8 Kohlenstoffatome. Er kann aus einer Polyoxyalkylenkette aus Propylenoxid oder Butylenoxid bestehen, bevorzugt wird jedoch ein langkettiger Kohlenwasserstoffrest. So wird auch in den angegebenen Beispielen der EP-A1 0 216 479 nur die Verwendung von Kohlenwasserstoffresten offenbart.

Insbesondere werden Kohlenwasserstoffreste mit 8 bis 30 Kohlenstoffatomen, wie Octyl-, Lauryl- oder Stearyl-, Aralkyl-, wie z.B. 2-Phenylethyl-, Aryl-, wie z.B. Naphthyl-, Alkaryl-, wie z.B. Alkylphenyl- oder Cycloalkyl-Gruppen genannt.

Es wird besonders darauf hingewiesen, daß Substituenten an diesen Resten auf keinen Fall den hydrophoben Charakter des Restes R beeinträchtigen dürfen, da sonst die durch den hydrophoben Charakter der Reste R hervorgerufene zusätzliche verdickende Wirkung verloren gehen soll.

Besonders bevorzugte Copolymerisate sind solche, die aus 20 bis 60 Gew.-% Acrylsäure und/oder Methacrylsäure, 5 bis 60 Gew.-% Ethylacrylat oder anderen Alkyl(meth)acrylaten und 2 bis 50 Gew.-% des Allylethers bestehen.

Des weiteren sind Copolymerisate bevorzugt, die aus 20 bis 60 Gew.-% Dialkylaminoalkyl(meth)acrylat oder Acrylamid, 5 bis 60 Gew.-% Ethylacrylat oder Methylmethacrylat oder anderen Alkylmethacrylaten und 2 bis 50 Gew.-% des Allylethers bestehen.

Die Polymerisation der Komponenten a), b), c) und d) liefert eine Emulsion, in der das Verdickungsmittel unlöslich und nicht gequollen vorliegt. Erst durch die Zugabe von Alkali oder Säure wird dann die gewünschte Verdickung der Emulsion erzielt.

Diese Copolymerisate können Molekulargewichte von weit über 0,5 Millionen erreichen, in der Regel liegen sie zwischen 1 und 5 Millionen. Um das Molekulargewicht auf einen Bereich von 100 000 bis 200 000 zu beschränken, in dem die gewünschten verdickenden Eigenschaften optimal sind, werden deshalb Kettenüberträger zugesetzt.

Die Polymerisation wird in einer Emulsion bei einem pH-Wert durchgeführt, bei dem das Polymerisat unlöslich oder ungequollen vorliegt. So kann das Polymerisat z.B. aus der Emulsion entfernt und getrocknet isoliert werden.

Oftmals ist jedoch die Verwendung der wäßrigen Dispersion des Polymerisates vorteilhaft. Die Emulsion kann dann der zu verdickenden Lösung zugesetzt werden, wobei der pH-Wert zur Erzielung des gewünschten Verdickungseffektes vor oder nach der Zugabe zu der Zubereitung durch die Zugabe von Alkali, je nach eingesetztem ionischen Monomeren, eingestellt wird.

2

Die zu verwendende Menge des Verdickungsmittels beträgt in der Regel 0,05 bis 5 Gew.-% des Wassergehaltes der zu verdickenden Zubereitung.

Die Copolymerisate sind von besonderer Bedeutung für das Verdicken wäßriger Medien, die Elektrolyte oder eine dispergierte Phase enthalten. Sie werden insbesondere zur Verdickung von Farben, Druckpasten für Textilien, Bleichmitteln, Laugen oder Farbentfernerzubereitungen benutzt. Weitere wichtige Anwendungen betreffen die Erdöl- oder Erzförderung. Sie dienen außerdem als Filtrationshilfen oder Flokkulantien.

Es zeigt sich jedoch, daß nicht für alle Anwendungen die erzielten Verdickungswirkungen ausreichend sind. Oftmals werden noch bessere Verdickungseffekte gewünscht, wobei aber gleichzeitig die Menge des zugesetzten Verdickungsmittels möglichst gering bleiben soll.

Der Erfindung liegt deshalb die Aufgabe zugrunde, Copolymerisate zu finden, deren verdickende Eigenschaften bei einem pH-Wert von $\geqq$ 5 noch wesentlich verbessert sind. Hierdurch soll es möglich sein, höhere Viskositäten als die bisher erreichten einzustellen oder aber den gleichen Verdickungseffekt mit weniger Verdickungsmittel zu erzielen. Zusätzlich wird für spezielle Anwendungen ein niedriger Thixotropieindex angestrebt, so daß sich die mit den Copolymerisaten hergestellten Zubereitungen wie Newtonsche Flüssigkeiten verhalten.

Überraschenderweise konnte diese Aufgabe durch ein Copolymerisat, erhältlich durch Polymerisation in Emulsion von

5 bis 60 Gew.-% Acryl- oder Methacrylsäure,

10 bis 80 Gew.-% eines nichtionischen Vinylmonomeren und

2 bis 60 Gew.-% eines Makromonomeren der allgemeinen Formel

$$CH_2{=}CR{-}CH_2{-}O{-}(C_nH_{2n}O)_a(C_mH_{2m}O)_b(C_pH_{2p}O)_cH$$

R = H oder $CH_3$,

n, p gleich oder verschieden und jeweils 2 oder 3, mit der Maßgabe, daß im durchschnittlichen Molekül n oder p einen Wert von höchstens 2,5 hat,

m = ganze Zahl von 10 bis 18,

a = 10 bis 100,

b = 1 bis 10,

c = 0 bis 10,

wobei die Summe der Monomeren 100 Gew.-% betragen muß,

in wäßrigem Medium bei einem pH-Wert von 2,5 bis 5 in Gegenwart eines freie Radikale bildenden Initiators bei einer Temperatur von 60 bis 90°C, gelöst werden.

Als Monomere können sowohl Acryl- oder Methacrylsäure oder auch Mischungen beider verwendet werden. In dem zu polymerisierenden Comonomerengemisch sind Acryl- oder Methacrylsäure oder deren Mischungen in einer Menge von 5 bis 60 Gew.-%, bezogen auf Comonomere, vorzugsweise in einer Menge von 20 bis 40 Gew.-% enthalten, das nichtionische Vinylmonomere wird in einer Menge von 10 bis 80 Gew.-% eingesetzt.

Von besonderer Bedeutung für die überraschenden Eigenschaften der erfindungsgemäßen Copolymerisate ist das in einer Menge von 2 bis 60 Gew.-%, vorzugsweise 10 bis 25 Gew.-%, im Monomerengemisch enthaltene Makromonomere der allgemeinen Formel

$$CH_2{=}CR{-}CH_2{-}O{-}(C_nH_{2n}O)_a(C_mH_{2m}O)_b(C_pH_{2p}O)_cH$$

In dieser Formel ist R ein Wasserstoff- oder Methylrest. Bei den Makromonomeren handelt es sich somit um Polyoxyalkylenether des Allyl- oder Methallylalkohols. Dieser zeichnet sich vor allem durch hydrolytische Stabilität aus.

An die Hydroxylgruppe des Allyl- bzw. Methallylalkohols ist Ethylenoxid bzw. ein Gemisch von Ethylenoxid und Propylenoxid angelagert. Der Index n hat somit den Wert 2 im Falle der Anlagerung von Ethylenoxid bzw. 3 im Fall der Anlagerung von Propylenoxid. Wird ein Gemisch von Ethylenoxid und Propylenoxid angelagert, nimmt n im durchschnittlichen Molekül einen gebrochenen Zahlenwert an. Dabei soll die Bedingung erfüllt sein, daß im durchschnittlichen Molekül der Wert von n höchstens 2,5 beträgt, d.h. daß nicht mehr als 50 % des Ethylenoxids durch Propylenoxid ersetzt sein dürfen. Die Gesamtzahl der Oxyethylen- und Oxypropyleneinheiten im durchschnittlichen Molekül beträgt 10 bis 100, vorzugsweise 25 bis 60. Liegen sowohl Oxyethylen- als auch Oxypropyleneinheiten vor, so können diese statistisch angeordnet sein.

Die Makromonomeren weisen einen mittel- oder endständigen Block aus Oxyalkyleneinheiten mit 10 bis 18 Kohlenstoffatomen auf. Vorzugsweise beträgt die Kohlenstoffanzahl 10 bis 14. Dabei sind 1 bis 5 dieser langkettigen Alkylenoxide an das Makromonomere angelagert. Besonders bevorzugt werden Makromonomere eingesetzt, die 2 oder 3 langkettige Oxyalkyleneinheiten besitzen.

Außerdem können an die hydrophoben Oxyalkyleneinheiten mit 10 bis 18 Kohlenstoffatomen 0 bis 10 Oxyalkyleneinheiten als hydrophile Endgruppen angelagert werden. Das Oxyalkylen kann Ethylenoxid oder Propylenoxid oder eine Mischung aus beiden sein.

Bevorzugt ist ein erfindungsgemäßes Copolymerisat nach obiger Zusammensetzung, bei dem als nichtionisches Vinylmonomeres Acrylsäureester oder Vinylester oder N-Vinylpyrrolidon eingesetzt werden. Dabei weisen die Estergruppen 1 bis 4 Kohlenstoffatome auf. Man verwendet besonders Acrylsäureester, wie z.B. Methyl-, Ethyl-, Propyl- oder Butylester der Acrylsäure. Als Beispiel eines besonders geeigneten Vinylesters ist Vinylacetat zu nennen. Diese nichtionischen Vinylmonomeren werden in einer Menge von 10 bis 80 Gew.-%, bezogen auf das Comonomerengemisch, eingesetzt. Bevorzugt ist die Verwendung von 40 bis 70 Gew.-% der nichtionischen Vinylmonomeren im Gemisch. Auch Acrylamid, Methacrylamid und Styrol können eingesetzt werden.

Besonders bevorzugt ist ein erfindungsgemäßes Copolymerisat, welches dadurch erhältlich ist, daß man als Makromonomeres eine Verbindung der genannten allgemeinen Formel einsetzt, in der R = H, n = 2, p = 2, m = 10 bis 16, a = 25 bis 60, b = 2, 3 oder 4 und c = 1 bis 5 ist. Bei dieser Zusammensetzung zeigt das erfindungsgemäße Copolymerisat die beste verdickende Wirkung in den jeweiligen Zubereitungen.

Es war für den Fachmann überraschend, daß ein Allyletherpolyoxyalkylen mit einem endständigen, aus hydrophoben langkettigen Alkylenoxideinheiten mit jeweils 10 bis 18 Kohlenstoffatomen bestehenden Block eine Verstärkung der verdickenden Wirkung der damit hergestellten Copolymerisate hervorruft, da nach dem Stand der Technik die besondere verdickende Wirkung des Allylethercomonomeren durch hydrophobe Endgruppen mit mindestens 8 Kohlenstoffatomen, die entweder von Alkylenoxidresten mit 3 oder 4 Kohlenstoffatomen oder vorzugsweise von Alkylresten gebildet werden, hervorgerufen wird. Überraschenderweise bewirkt die Einführung dieser Oxyalkyleneinheiten mit 10 bis 18 Kohlenstoffatomen, insbesondere 10 bis 14 Kohlenstoffatomen, in die Makromonomeren deutlich verbesserte Verdickungseigenschaften der erfindungsgemäßen Copolymerisate im Vergleich zu den im Stand der Technik offenbarten Copolymerisaten.

Besonders überraschend ist die zusätzliche Verbesserung des Verdickungseffektes, wenn an den hydrophoben Block aus langkettigen Alkylenoxideinheiten mit jeweils 10 bis 18 Kohlenstoffatomen kurze hydrophile Alkylenoxidreste angelagert werden. Im Vergleich zu den mit hydrophoben langkettigen Oxyalkylenresten mit 10 bis 18 Kohlenstoffatomen versehenen Makromonomeren bewirken die hydrophilen Reste aus 1 bis 10 Oxyethylen- und/oder Oxypropyleneinheiten nochmals eine Steigerung des Verdickungseffektes um 100 %. Dies ist besonders überraschend, da im Stand der Technik eine Verbesserung der Verdickungseigenschaften auf den hydrophoben Charakter der Endgruppen zurückgeführt wird. Hier wird aber im Gegensatz dazu ein hydrophiler Charakter der Endgruppe erzeugt.

Die erfindungsgemäßen Copolymerisate sind durch Polymerisation in Emulsion erhältlich. Die Polymerisation in Emulsion wird im wäßrigen Medium in üblicher Weise bei einem pH-Wert von kleiner 5, insbesondere 2,5 bis 5, durchgeführt. Man setzt dabei dem wäßrigen Medium einen freie Radikale bildenden Initiator, wie z. B. peroxidische Verbindungen, insbesondere anorganische Persulfate, wie z. B. Ammoniumperoxydisulfat, zu. Die Polymerisationstemperatur beträgt 60 bis 90°C. Üblicherweise verwendet man zur Emulgierung des Monomerengemisches bzw. des entstehenden Copolymerisates einen oder mehrere Emulgatoren. Besonders bevorzugt verwendet man ein Gemisch aus einem anionenaktiven und einem nichtionogenen Emulgator, wie z.B. ein Gemisch aus Alkalidodecylbenzolsulfonat und einem Oxyethylenether des Nonylphenols oder des Tridecylalkohols. Aufgrund der Wasserlöslichkeit mancher Monomerer kann die Polymerisation zunächst partiell auch in Lösung erfolgen.

Die Durchführung der Copolymerisation geschieht in einer dem Fachmann vertrauten üblichen Weise und ist nicht Gegenstand der vorliegenden Erfindung.

Man erhält bei der Polymerisation in Emulsion eine feinteilige, stabile Dispersion des Copolymerisates. Zweckmäßig verwendet man solche Mengen an Comonomeren, daß man etwa 10 bis 30 gew.-%ige Dispersionen (bezogen auf Copolymerisat) erhält. Die Copolymerisatdispersionen haben eine hohe Stabilität und können in konzentrierter Form in den Handel gebracht werden. Sie sind bei einem pH-Wert von ≦ 5 niedrigviskos und weisen praktisch die Viskosität von Wasser auf.

Die durch Polymerisation in Emulsion erhaltenen erfindungsgemäßen Copolymerisate haben ein mittleres Molekulargewicht von 30 000 bis 2 000 000, insbesondere 100 000 bis 1 000 000, wobei die Molekulargewichte gelchromatographisch bestimmt worden sind.

Erhöht man durch Zusatz von basisch wirkenden Verbindungen, wie z.B. Alkalilauge oder Ammoniumhydroxidlösung, den pH-Wert der Dispersion über einen Wert von etwa 5,5, entsteht aus der milchigen Dispersion eine klare, farblose, hochviskose, kolloidale Lösung des Copolymerisates. Die Viskosität dieser Lösung hängt vom Aufbau des erfindungsgemäßen Copolymerisates und insbesondere von der Konzentration des erfindungsgemäßen Copolymerisates in dem wäßrigen System ab. Die erfindungsgemäßen Copolymerisate zeigen ein Maximum ihrer verdickenden Wirkung, wenn das Comonomerengemisch etwa 25 bis 35 Mol-% der $\alpha,\beta$-olefinisch ungesättigten Carbonsäuren enthält.

Von besonderem Einfluß ist Art und Aufbau des im Comonomerengemisch enthaltenen Makromonomeren. Insbesondere wird die Viskosität durch die Anzahl der im Makromonomeren enthaltenen Oxyethylen- bzw.

Oxypropyleneinheiten und der langkettigen Oxyalkyleneinheiten mit 10 bis 18 Kohlenstoffatomen sowie besonders durch die endständigen hydrophilen Oxyalkyleneinheiten beeinflußt. Eine maximale verdickende Wirkung wird erzielt, wenn die hydrophile Endgruppe aus 2 bis 5 Oxyalkyleneinheiten mit jeweils 2 bis 3 Kohlenstoffatomen besteht.

Die erfindungsgemäßen Copolymerisate eignen sich insbesondere zur Herstellung von wäßrigen Lösungen oder Dispersionen von Anstrichfarben, denen sie als Dispersion zugesetzt werden und die dann anschließend neutralisiert werden. Ferner können sie in kosmetischen Zubereitungen, als Flokkulantien oder bei der Erdölförderung Anwendung finden.

Die erfindungsgemäßen Copolymerisate sind bereits in sehr geringen Konzentrationen wirksam. Im allgemeinen genügt ein Zusatz von 0,05 bis 1 Gew.-%, bezogen auf das Gesamtgewicht der Zubereitung, um die gewünschten hohen Viskositäten im pH-Bereich von $\geqq$ 5,5 zu erzielen.

Ein weiterer Gegenstand der vorliegenden Erfindung ist ein Verfahren zum Verdicken wäßriger Lösungen, dadurch gekennzeichnet, daß man ein Copolymerisat der oben angegebenen erfindungsgemäßen Zusammensetzung (gemäß Patentanspruch 1, 2 oder 3) in der zu verdickenden Zubereitung dispergiert und den pH-Wert der wäßrigen Lösung durch Zugabe von alkalisch reagierenden Substanzen auf einen pH-Wert von $\geqq$ 5,5 einstellt.

Bei der pH-Wert-Einstellung zeigt sich, daß Alkaligegenionen zu hohen Thixotropieindices führen. Verwendet man dagegen Polyamine, insbesondere langkettige Polyamine, zur Neutralisation, wird dieser Effekt beseitigt.

Besonders bevorzugt ist deshalb ein Verfahren, bei dem man als alkalisch reagierende Substanzen Polyamine oder aminofunktionelle Polyoxyalkylene verwendet.

Insbesondere bevorzugt ist dabei ein Verfahren, bei dem man als alkalisch reagierende Substanzen aminofunktionelle Polyoxyalkylene des Glyzerins oder Trimethylolpropans verwendet, wobei die endständigen OH-Gruppen durch $NH_2$-Gruppen ersetzt sind.

Zur Herstellung dieser Polyoxyalkylenamine verwendet man als Startalkohol z.B. Glyzerin oder Trimethylolpropan, setzt mit Alkylenoxid um und funktionalisiert dann durch Aminolyse mit Ammoniak. Als Alkylenoxide können sowohl Ethylenoxid als auch Propylenoxid oder Mischungen der beiden verwendet werden. Solche aminofunktionellen Polyalkylenoxide haben ein durchschnittliches Molekulargewicht von 100 bis 2000 und enthalten 2 bis 50 Alkylenoxideinheiten.

Verwendet man Polyoxyalkylenamine zur Einstellung des pH-Wertes, verhalten sich die verdickten Zubereitungen zumindest angenähert wie Newtonsche Flüssigkeiten, d.h. durch die Verwendung der Amine zur Neutralisation wird der Thixotropieindex verkleinert.

Ein weiterer Gegenstand der Erfindung betrifft die Verwendung der Copolymerisate als Verdickungsmittel in wäßrigen Zubereitungen eines pH-Wertes $\geqq$ 5,5 in Mengen von 0,05 bis 5 Gew.-%, bezogen auf die Zubereitung.

Die erfindungsgemäßen Copolymerisate sind schon beim Zusatz geringer Mengen hochwirksam und ermöglichen eine Reduzierung der üblicherweise verwendeten Mengen an Verdickungsmitteln bei gleichem Verdickungseffekt. So ist in der Regel schon eine Zugabe von < 1 Gew.-% des erfindungsgemäßen Copolymerisates für die Erzielung des gewünschten Verdickungseffektes ausreichend.

Es ist außerdem möglich, durch Verwendung der erfindungsgemäßen Copolymerisate wäßrige Zubereitungen in schnittfähige Gele zu überführen, wobei die zu verwendende Menge an Copolymerisat deutlich geringer ist als die nach dem Stand der Technik benötigten Quantitäten.

In den folgenden Beispielen werden die Herstellung der erfindungsgemäßen Copolymerisate und deren verdickende Eigenschaften näher erläutert bzw. gezeigt.

Beispiel 1 A

Synthese eines Allylpolyethermakromonomeren (nicht erfindungsgemäß)

116 g Allylalkohol (ca. 2 Mol) und 14 g Kaliummethylat (ca. 0,2 Mol) werden in einem Druckreaktor mit einem zwangsfördernden Umlaufsystem sorgfältig mit Reinstickstoff gespült und auf 110°C erhitzt. Dann werden 4400 g (ca. 100 Mol) Ethylenoxid so schnell zugegeben, daß die Innentemperatur des Reaktors 120°C und der Innendruck 6 bar nicht überschreiten. Nach der vollständigen Zugabe des Ethylenoxids wird die Temperatur solange auf 115°C gehalten, bis ein konstant bleibender Druck das Ende der Reaktion anzeigt. Anschließend werden 960 g (ca. 4 Mol) Hexadecenoxid-1 zugegeben und über einen Zeitraum von 2 h bei 120°C erhitzt. In einem letzten Schritt werden nochmals 440 g (ca. 10 Mol) Ethylenoxid eingeführt und wiederum solange bei 115°C erhitzt, bis sich ein gleichbleibender Druck eingestellt hat. Schließlich werden restliche Monomere bei 80 bis 90°C unter Vakuum entfernt. Das Reaktionsprodukt wird mit Phosphorsäure neutralisiert, das Wasser durch Destillation im Vakuum entfernt und das gebildete Natriumphosphat unter Verwendung eines Filterhilfsmittels abfiltriert.

Die Hydroxylzahl der Produkte beträgt 23,2; bei Annahme einer Funktionalität von 1 entspricht dies einem Molekulargewicht von 2420. Der durch Bestimmung der Jodzahl ermittelte Gehalt an Doppelbindungen entspricht einem Gehalt von 82 Mol-%.

Beispiele 2 A bis 24 A

Synthese verschiedener Allylpolyethermakromonomerer (nicht erfindungsgemäß)

Dem in Beispiel 1 A beschriebenen Syntheseweg folgend werden weitere Allylpolyetherole hergestellt, deren Zusammensetzung und Molekulargewichte in Tabelle 1 wiedergegeben werden. Die Aufzählung der Alkylenoxide von links nach rechts geschieht in Übereinstimmung mit der Abfolge der Alkoxylierung des Allylalkohols mit der Ausnahme, daß Ethylenoxid und Propylenoxid im ersten Schritt auch als Mischung zur Anlagerung kommen können. Das angegebene Molekulargewicht wird durch Bestimmung der Hydroxylzahl und durch Annahme einer Funktionalität von 1 ermittelt.

Beispiel 1 B

Copolymerisation eines Allylpolyethermakromonomers mit Methacrylsäure und Methylacrylat in wäßriger Emulsion (erfindungsgemäß)

Aus 240 g (ca. 0,106 Mol) des Allylpolyethermakromonomeren aus Beispiel 1 A, 130 g des Ammoniumsalzes eines Octylphenolpolyethylenglykolsulfonates mit 9 Ethylenoxideinheiten, 360 g (ca. 3,9 Mol) Methacrylsäure, 640 g (ca. 7,4 Mol) Methylacrylat und 3000 g entgastem, deionisiertem Wasser wird unter Stickstoff mit einem scherkraftreichen Rührer eine Emulsion hergestellt. Die erhaltene Emulsion wird über einen Zeitraum von 2 bis 3 h zu 2100 g entgastem, deionisiertem Wasser gegeben, das 20 g einer 5 %igen wäßrigen Lösung von Kaliumperoxydisulfat enthält. Die Temperatur des Reaktionansatzes beträgt 80 bis 85°C. Nach der vollständigen Zugabe der Emulsion werden nochmals 28 g einer 5 %igen wäßrigen Lösung von Kaliumperoxydisulfat zugegeben und die Temperatur für weitere 2 h bei 85°C gehalten. Die so hergestellte Dispersion hat nach Filtration einen Festkörpergehalt von etwa 20 Gew.-%, der Gehalt an Restmonomeren ist kleiner als 0,01 Gew.-%. Die Viskosität der Dispersion liegt bei etwa 5 mPas. Der pH-Wert liegt bei 4.

Durch Zugabe von Wasser wird die Dispersion auf einen Feststoffgehalt von 1 % verdünnt. Nach Zugabe von 10 %igem wäßrigen Ammoniak bis zur Einstellung eines pH-Wertes von 9 wird eine klare Lösung mit einer Viskosität von > 10$^6$ mPas (Brookfield-Viskosimeter: Spindel LV2 bei 3 Upm) erhalten.

Beispiele 2 B bis 24 B

Copolymerisation der Allylpolyethermakromonomeren aus den Beispielen 2 A bis 24 A mit Methacrylsäure und Methylacrylat in wäßriger Emulsion

Grundsätzlich wird die zu den Emulsionspolymerisaten 2 B bis 40 B führende Polymerisation gemäß Beispiel 1 B ausgeführt. Die eingesetzten Allylpolyethermakromonomeren sind jedoch entsprechend den Beispielen 2 A bis 24 A von unterschiedlicher Zusammensetzung, zusätzlich ändert sich die Einsatzmenge. Ebenfalls ändert sich die Menge des eingesetzten Methylacrylats und der Methacrylsäure.

Die erhaltenen Dispersionen werden mit Wasser auf einen Feststoffgehalt von 1 bis 0,25 Gew.-% verdünnt; nach Zusatz von 10 %igem wäßrigen Ammoniak wird die Viskosität mit einem Meßgerät nach Brookfield (Spindel LV2 bei 3 Upm) ermittelt. Der Thixotropieindex ergibt sich aus dem Verhältnis der Viskosität bei 3 und 30 Upm. Zusammensetzung und viskositätserhöhende Wirkung der Emulsionspolymerisate werden in Tabelle 2 A gezeigt.

Beispiele 25 B bis 40 B

Copolymerisation der Allylpolyethermakromonomeren aus den Beispielen 1 A bis 19 A mit verschiedenen ungesättigten Carbonsäuren und Vinylmonomeren

Es wird verfahren wie in den Beispielen 1 B bis 24 B mit dem Unterschied, daß neben Methacrylsäure auch Acrylsäure und verschiedene Vinylmonomere in unterschiedlicher Menge zum Einsatz kommen. Die Zusammensetzung der Copolymerisate und deren verdickende Wirkung nach der Neutralisation werden in der Tabelle 2 B beschrieben.

Legende:

AS   Acrylsäure
MAS   Methacrylsäure
MA   Methylacrylat
EA   Ethylacrylat
BA   Butylacrylat
VAC   Vinylacetat
NVP   N-Vinylpyrrolidon
AAM   Acrylamid
BDDA   Butandioldiacrylat

Ermittlung des Viskositätsindex verschiedener Emulsionspolymerisate bei der Neutralisation mit einem aminofunktionellen Polyether

Nach Verdünnung der Emulsionspolymerisate 1 B, 7 B, 8 B, 22 B und 23 B auf eine Festkörperkonzentration von 0,25 Gew.-% wurde der pH-Wert mit Hilfe eines aminofunktionellen Polypropylenoxids mit der auf die Aminogruppen bezogenen Funktionalität von 3 und einem Molekulargewicht von ca. 400 (Jeffamin T 400 der Fa. Deutsche Texaco) auf 9 angehoben. Die Zusammensetzung der Copolymerisate, die Viskosität nach Brookfield bei 23°C mit der Spindel LV2 bei Umdrehungszahlen von 3 Upm und 30 Upm werden in der Tabelle 3 gezeigt.

Tabelle 1

| Allylpoly-etherol Beisp. Nr. | Ethylen-oxid [Mol] | Propylen-oxid [Mol] | α-Olefin-epoxid C-Zahl | [Mol] | Ethylen-oxid [Mol] | Molekular-gewicht aus OHZ |
|---|---|---|---|---|---|---|
| 2 A ˣ | 50 | - | 4 | 7 | 2 | 2120 |
| 3 A ˣ | 50 | - | 8 | 2 | 3 | 2360 |
| 4 A | 50 | - | 10 | 2 | 5 | 2400 |
| 5 A | 50 | - | 12 | 2 | - | 2100 |
| 6 A | 50 | - | 12 | 2 | 5 | 2250 |
| 7 A | 50 | - | 14 | 2 | - | 2600 |
| 8 A | 50 | - | 14 | 2 | 5 | 2740 |
| 9 A | 50 | - | 14 | 4 | - | 2500 |
| 10 A | 50 | - | 14 | 4 | 5 | 2620 |
| 11 A | 25 | 19 | 14 | 2 | - | 2160 |
| 12 A | 25 | 19 | 14 | 2 | 5 | 2300 |
| 13 A | 42 | 6 | 14 | 2 | - | 2440 |
| 14 A | 42 | 6 | 14 | 2 | 5 | 2570 |
| 15 A | 50 | - | 16 | 2 | - | 2270 |
| 16 A | 50 | - | 16 | 2 | 1 | 2300 |
| 17 A | 50 | - | 16 | 2 | 2 | 2320 |
| 18 A | 50 | - | 16 | 1 | 5 | 2430 |
| 19 A | 50 | - | 16 | 3 | 5 | 2520 |
| 20 A | 50 | - | 14 | 5 | 5 | 2770 |
| 21 A | 10 | - | 16 | 2 | 5 | 1100 |
| 22 A | 100 | - | 16 | 2 | 5 | 4250 |
| 23 A | 50 | - | 18 | 2 | - | 2460 |
| 24 A | 50 | - | 18 | 2 | 5 | 2630 |

ˣVergleich

Tabelle 2 A

| Copolymer Beisp. Nr. | Allylpolyetherol Beisp. Nr. | Gew.-% | Methacrylsäure Gew.-% | Methylacrylat Gew.-% | Viskosität [mPas] 1 %ig | 0,25 %ig | Thixotropie Index |
|---|---|---|---|---|---|---|---|
| 2 B [x] | 2 A | 15 | 27,5 | 57,5 | 30 + | – | – |
| 3 B [x] | 3 A | 15 | 27,5 | 57,5 | 150 + | – | – |
| 4 B | 4 A | 15 | 27,5 | 57,5 | 255 + | – | – |
| 5 B | 5 A | 15 | 27,5 | 57,5 | 220000 * | 1330 * | – |
| 6 B | 6 A | 15 | 27,5 | 57,5 | 430000 * | 2780 * | – |
| 7 B | 7 A | 15 | 27,5 | 57,5 | $> 10^6$ * | 6200 * | 5,2 |
| 8 B | 8 A | 15 | 27,5 | 57,5 | $> 10^6$ * | 9950 * | 6,4 |
| 9 B | 9 A | 15 | 27,5 | 57,5 | $> 10^6$ * | 4000 * | 6,0 |
| 10 B | 10 A | 15 | 27,5 | 57,5 | $> 10^6$ * | 6800 * | 5,9 |
| 11 B | 11 A | 15 | 27,5 | 57,5 | 1840 * | – | 1,2 |
| 12 B | 12 A | 15 | 27,5 | 57,5 | 3200 * | – | – |
| 13 B | 13 A | 15 | 27,5 | 57,5 | $> 10^6$ * | 5100 * | 6,1 |
| 14 B | 14 A | 15 | 27,5 | 57,5 | $> 10^6$ * | 9500 * | 5,6 |
| 15 B | 16 A | 15 | 27,5 | 57,5 | $> 10^6$ * | 6100 * | 4,3 |
| 16 B | 17 A | 15 | 27,5 | 57,5 | $> 10^6$ * | 7200 * | 4,7 |

[x]Vergleich

EP 0 413 953 B1

## Tabelle 2 A - Fortsetzung

| Copolymer Beisp. Nr. | Allylpolyetherol Beisp. Nr. | Gew.-% | Methacrylsäure Gew.-% | Methylacrylat Gew.-% | Viskosität [mPas] 1 %ig | 0,25 %ig | Thixotropie Index |
|---|---|---|---|---|---|---|---|
| 17 B | 18 A | 15 | 27,5 | 57,5 | 120 + | - | - |
| 18 B | 19 A | 15 | 27,5 | 57,5 | > $10^6$ * | 8300 * | 6,2 |
| 19 B | 20 A | 15 | 27,5 | 57,5 | 630000 * | 3500 * | 5,0 |
| 20 B | 21 A | 15 | 27,5 | 57,5 | 210000 * | 1350 * | 3,5 |
| 21 B | 22 A | 15 | 27,5 | 57,5 | > $10^6$ * | 8550 * | 5,3 |
| 22 B | 23 A | 15 | 27,5 | 57,5 | 370000 * | 2100 * | 5,6 |
| 23 B | 24 A | 15 | 27,5 | 57,5 | 780000 * | 4000 * | 6,0 |
| 24 B | 15 A | 15 | 27,5 | 57,5 | > $10^6$ * | 4900 * | 5,5 |

+ = Spindel LV3 des Brookfield Viskosimeters

* = Spindel LV2 des Brookfield Viskosimeters

EP 0 413 953 B1

Tabelle 2 B

| Copolymerisat | Allylpolyetherol | | ungesättigte Carbonsäure | | Vinylmonomer | | Viskosität [mPas] | | Thixotropie |
|---|---|---|---|---|---|---|---|---|---|
| Beisp. Nr. | Beisp. Nr. | Gew.-% | Typ | Gew.-% | Typ | Gew.-% | 1 %ig | 0,25 %ig | Index |
| 25 B | 8 A | 4 | MAS | 27,5 | MA | 68,5 | 170000 | 900 | 2,8 |
| 26 B | 8 A | 6 | MAS | 27,5 | MA | 66,5 | $> 10^6$ | 4800 | 3,5 |
| 27 B | 8 A | 10 | MAS | 27,5 | MA | 62,5 | $> 10^6$ | 5000 | 5,7 |
| 28 B | 8 A | 20 | MAS | 27,5 | MA | 52,5 | $> 10^6$ | 7900 | 5,5 |
| 29 B | 8 A | 40 | AS | 27,5 | MA | 32,5 | 550000 | 3000 | - |
| 30 B | 8 A | 60 | MAS | 27,5 | MA | 12,5 | 2 | - | - |
| 31 B | 1 A | 15 | MAS | 5,0 | MA | 80,0 | 35 | < 5 | - |
| 32 B | 1 A | 15 | MAS | 10,0 | MA | 75,0 | 130000 | 780 | 4,2 |
| 33 B | 1 A | 15 | MAS | 20,0 | MA | 65,0 | $> 10^6$ | 7700 | 5,2 |
| 34 B | 1 A | 15 | MAS | 45,0 | MA | 40,0 | 310000 | 5600 | 4,1 |
| 35 B | 1 A | 15 | MAS | 60,0 | MA | 25,0 | 1600 | - | - |
| 36 B | 19 A | 20 | MAS | 40,0 | EA | 40,0 | 75000 | - | - |
| 37 B | 19 A | 20 | MAS | 40,0 | VAC | 40,0 | 30000 | - | - |
| 38 B | 19 A | 20 | MAS | 27,5 | BA/NVP | 34,5/23,0 | 100000 | - | - |
| 39 B | 19 A | 15 | MAS | 27,5 | MA/AAM | 47,5/10,0 | 150000 | 880 | - |
| 40 B | 19 A | 15 | MAS | 27,5 | MA/BDDA | 57,3/ 0,2 | $> 10^6$ | 5000 | 5,0 |

EP 0 413 953 B1

EP 0 413 953 B1

Tabelle 3

| Copolymer Beisp. Nr. | Allylpolyetherol Beisp. Nr. | Gew.-% | Methacrylsäure Gew.-% | Methylacrylat Gew.-% | Viskosität [mPas] 0,25 %ig | Thixotropie Index |
|---|---|---|---|---|---|---|
| 1 B | 1 A | 15 | 27,5 | 57,5 | 1000 | 2,1 |
| 7 B | 7 A | 15 | 27,5 | 57,5 | 980 | 1,5 |
| 8 B | 8 A | 15 | 27,5 | 57,5 | 2600 | 2,3 |
| 22 B | 23 A | 15 | 27,5 | 57,5 | 1700 | 1,9 |
| 23 B | 24 A | 15 | 27,5 | 57,5 | 2820 | 2,8 |

## Patentansprüche

1. Copolymerisat, erhältlich durch Emulsionspolymerisation von
   5 bis 60 Gew.-% Acryl- oder Methacrylsäure,
   10 bis 80 Gew.-% eines nichtionischen Vinylmonomeren und
   2 bis 60 Gew.-% eines Makromonomeren der allgemeinen Formel
   $$CH_2=CR-CH_2-O-(C_nH_{2n}O)_a(C_mH_{2m}O)_b(C_pH_{2p}O)_cH$$
   R = H oder $CH_3$,
   n, p gleich oder verschieden und jeweils 2 oder 3, mit der Maßgabe, daß im durchschnittlichen Molekül n und p einen Wert von höchstens 2,5 haben,
   m = ganze Zahl von 10 bis 18,
   a = 10 bis 100,
   b = 1 bis 10,
   c = 0 bis 10,
   wobei die Summe der Monomeren 100 Gew.-% betragen muß,
   in wäßrigem Medium bei einem pH-Wert von 2,5 bis 5 in Gegenwart eines freie Radikale bildenden Initiators bei einer Temperatur von 60 bis 90°C.

2. Copolymerisat nach Anspruch 1, welches dadurch erhältlich ist, daß man als nichtionisches Vinylmonomeres Acrylsäureester mit 1 bis 4 Kohlenstoffatomen im Alkoholrest oder Vinylester mit 1 bis 4 Kohlenstoffatomen im Säurerest und/oder N-Vinylpyrrolidon einsetzt.

3. Copolymerisat nach Anspruch 1 oder 2, welches dadurch erhältlich ist, daß man als Makromonomeres eine Verbindung der allgemeinen Formel
   $$CH_2=CR-CH_2-O-(C_nH_{2n}O)_a(C_mH_{2m}O)_b(C_pH_{2p}O)_cH$$
   einsetzt, in der
   R = H,
   n = 2,
   p = 2,
   m = 10 bis 16,
   a = 25 bis 60,
   b = 2, 3 oder 4,
   c = 1 bis 5
   ist.

4. Verfahren zum Verdicken wäßriger Lösungen, dadurch gekennzeichnet, daß man ein Copolymerisat gemäß Anspruch 1, 2 oder 3 in der zu verdickenden Lösung löst und den pH-Wert der wäßrigen Lösung durch Zugabe von alkalisch reagierenden Substanzen auf einen pH-Wert von $\geqq 5,5$ einstellt.

5. Verfahren nach Anspruch 4, dadurch gekennzeichnet, daß man als alkalisch reagierende Substanzen Polyamine oder aminofunktionelle Polyoxyalkylene verwendet.

6. Verfahren nach Anspruch 4 oder 5, dadurch gekennzeichnet, daß man als alkalisch reagierende Substanzen aminofunktionelle Polyoxyalkylene des Glyzerins oder Trimethylolpropans verwendet, wobei die endständigen OH-Gruppen durch $NH_2$-Gruppen ersetzt sind.

7. Verwendung der Copolymerisate nach einem oder mehreren der vorhergehenden Ansprüche als Verdickungsmittel in wäßrigen Zubereitungen eines pH-Wertes $\geqq 5,5$ in Mengen von 0,05 bis 5 Gew.-%, bezogen auf die Zubereitung.

## Claims

1. Copolymer obtainable by emulsion polymerisation of
   5 to 60 % by weight of acrylic or methacrylic acid,
   10 to 80 % by weight of a nonionic vinyl monomer, and
   2 to 60 % by weight of a macromonomer of the formula
   $$CH_2=CR-CH_2-O-(C_nH_{2n}O)_a(C_mH_{2m}O)_b(C_pH_{2p}O)_cH$$
   where

R = H or CH₃,

n, p are the same or different and are in each case 2 or 3, with the proviso that, in the average molecule, n and p have a value of at most 2.5,

m = an integer from 10 to 18,

a = 10 to 100,

b = 1 to 10,

c = 0 to 10,

where the sum of the monomers must total 100 % by weight, in aqueous medium at a pH of 2.5 to 5 in the presence of a free-radical-forming initiator at a temperature of from 60 to 90°C.

2. Copolymer according to Claim 1, which can be obtained by using, as nonionic vinyl monomer, acrylic acid esters having 1 to 4 carbon atoms in the alcohol radical or vinyl esters having 1 to 4 carbon atoms in the acid radical and/or N-vinylpyrrolidone.

3. Copolymer according to Claim 1 or 2, which can be obtained by using, as macromonomer, a compound of the general formula

$$CH_2=CR-CH_2-O-(C_nH_{2n}O)_a(C_mH_{2m}O)_b(C_pH_{2p}O)_cH$$

in which

R = H,

n = 2,

p = 2,

m = 10 to 16,

a = 25 to 60,

b = 2, 3 or 4,

c = 1 to 5.

4. Process for thickening aqueous solutions, characterised in that a copolymer according to Claim 1, 2 or 3 is dissolved in the solution to be thickened and the pH of the aqueous solution is adjusted to a value of ≧ 5.5 by adding alkaline reacting substances.

5. Process according to Claim 4, characterised in that the alkaline reacting substances used are polyamine or amino-functional polyoxyalkylenes.

6. Process according to Claim 4 or 5, characterised in that the alkaline reacting substances used are amino-functional polyoxyalkylenes of glycerol or trimethylolpropane in which the terminal OH groups have been replaced by NH₂ groups.

7. Use of the copolymers according to one or more of the preceding claims as thickening agents in aqueous preparations of pH ≧ 5.5 in amounts of 0.05 to 5% by weight based on the preparation.


## Revendications

1. Copolymère, qu'on obtient grâce à la polymérisation en émulsion de :
   5 à 60 % en poids d'acide acrylique ou méthacrylique,
   10 à 80 % en poids d'un monomère vinylique non ionique, et
   2 à 60 % en poids d'un macromonomère de formule générale

   $$CH_2=CR-CH_2-O-(C_nH_{2n}O)_a(C_mH_{2m}O)_b(C_pH_{2p}O)_cH,$$

   R = H ou CH₃,

   n et p sont identiques ou différents et valent chacun 2 ou 3, à la condition que n ou p vaille au plus 2,5 dans la molécule moyenne,

   m = un nombre entier valant de 10 à 18,

   a = de 10 à 100,

   b = de 1 à 10,

   c = de 0 à 10,

   la somme des monomères devant valoir 100 % en poids, dans un milieu aqueux à un pH compris entre 2,5 et 5, en présence d'un initiateur formant des radicaux libres, à une température de 60 à 90°C.

2. Copolymère selon la revendication 1, qu'on obtient en utilisant, comme monomère vinylique non ionique, des esters de l'acide acrylique comportant de 1 à 4 atomes de carbone dans le reste d'alcool ou des esters vinyliques comportant de 1 à 4 atomes de carbone dans le reste d'acide et/ou la N-vinylpyrrolidone.

3. Copolymère selon la revendication 1 ou 2, qu'on obtient en utilisant, comme macromonomère, un composé de formule générale :

$$CH_2=CR-CH_2-O-(C_nH_{2n}O)_a(C_mH_{2m}O)_b(C_pH_{2p}O)_cH,$$

dans laquelle
R = H,
n = 2,
p = 2,
m = 10 à 16,
a = 25 à 60,
b = 2, 3 ou 4,
c = 1 à 5.

4. Procédé pour épaissir des solutions aqueuses, caractérisé en ce qu'on dissout un copolymère, selon la revendication 1, 2 ou 3, dans la solution à épaissir, et on règle le pH de la solution aqueuse à pH $\geqq$ 5,5 grâce à l'addition de substances alcalinisantes.

5. Procédé selon la revendication 4, caractérisé en ce qu'on utilise, comme substances alcalinisantes, des polyamines ou polyoxyalkylènes à fonctionnalité amino.

6. Procédé selon la revendication 4 ou 5, caractérisé en ce qu'on utilise, comme substances alcalinisantes, des polyoxyalkylènes à fonctionnalité amino du glycérol ou du triméthylolpropane, les groupes OH situés en fin de chaîne étant remplacés par des groupes $NH_2$.

7. Utilisation des copolymères selon une ou plusieurs des revendications précédéntes, en tant qu'agents épaississants dans des préparations aqueuses à pH $\geqq$ 5,5, en une quantité allant de 0,05 à 5 % en poids, par rapport à la préparation.